# EUROPÄISCHE PATENTSCHRIFT

(11) **EP 2 658 765 B1**
(45) Veröffentlichungstag und Bekanntmachung des Hinweises auf die Patenterteilung: **07.10.2015**
(21) Anmeldenummer: 11802843.0
(22) Anmeldetag: 16.12.2011
(51) Int. Cl.: B62B 3/14, G02B 25/00

(54) **LESEHILFE MIT EINEM DECKEL**
READING AID WITH A COVER
AIDE À LA LECTURE AVEC UN COUVERCLE

(30) Priorität: 29.12.2010 CH 21872010
(43) Veröffentlichungstag der Anmeldung: 06.11.2013
(73) Patentinhaber: Patwal GmbH, 9042 Speicher (CH)
(72) Erfinder: GYGAX, Markus, CH-9042 Speicher (CH)
(74) Vertreter: Gachnang, Hans Rudolf
(86) Internationale Anmeldenummer: PCT/CH2011/000300
(87) Internationale Veröffentlichungsnummer: WO 2012/088614

(56) Entgegenhaltungen:
- CH-A1- 700 274
- DE-A1-102008 043 184
- DE-U1- 9 206 769
- DE-U1-202007 011 770

## Beschreibung

Gegenstand der Erfindung ist eine Lesehilfe gemäss Patentanspruch 1.

Lesehilfen auf Einkaufswagen dienen dazu, auf den eingekauften Produkten das Kleingeschriebene zu vergrössern. Durch die Flut der Informationen, welche zwangsläufig auf Produkten enthalten sein muss, ist die Schrift immer kleiner geworden und für viele Konsumenten nicht mehr lesbar. Es sind aus diesem Grunde seit einiger Zeit auf Einkaufswagen sogenannte Lesehilfen in Gestalt einer grossen Lupe befestigt. Stehen solche Einkaufswagen, insbesondere bei grossen Einkaufszentren, auf der grünen Wiese auf dem Parkplatz, so kann durch die Fokussierung des Sonnenlichts durch die Lupe ein Brand ausgelöst werden. Um dies zu verhindern, sind die Lupengläser mit an deren Fassung oder Halterung angelenkten Deckeln abdeckbar. Die Deckel sind derart angelenkt, dass sie stets nach Benützung nach unten schwenken und das Glas, insbesondere beim Stauen der Wagen, abdecken. Um das Lesen kleiner Schriften optimal zu gestalten, liegen die Lupen im Blickbereich des Kunden und somit auch deren geschlossener Deckel.

Aus dem Stand der Technik (DE 10 2008 043 184 A1) ist eine "Vorrichtung zur Erleichterung des Lesens sowie Einkaufswagen" bekannt. Die dort gezeigte Lupe ist durch einen Stahldraht mit dem Einkaufswagen beweglich verbunden und sie ist zudem in einer Hülle eingesteckt, die vor der Benutzung der Lupe geöffnet werden muss. Wenn die Lupe nicht in Gebrauch ist, so liegt diese in der Hülle eingepackt am Stahldraht hängend in irgendeiner Position.

Aus der DE 20 2007 011 770 U1 ist eine weitere Befestigungseinrichtung für eine Lupe an einem Einkaufswagen bekannt. Auch hier ist die Lupe in einem Gehäuse eingelassen und kann aus diesem ausgeschwenkt werden, nachdem das Gehäuse vom Pfandschloss abgenommen worden ist. Diese Lupe weist die genau gleichen Nachteile auf wie die oben beschriebene. Auch sie liegt nicht im Sichtfeld des Benutzers.

Eine Aufgabe der vorliegenden Erfindung besteht nun darin, den Deckel derart auszubilden, dass seine optimale Lage nicht nur als Lichtschutz für die Linse, sondern auch anderweitig sinnvoll einzusetzen.

Gelöst wird diese Aufgabe durch die Merkmale des Patentanspruchs 1. Vorteilhafte Ausführungen der Erfindung sind in den abhängigen Ansprüchen umschrieben. Es gelingt durch einen Werbedruck auf der Oberfläche des Deckels, dem Besitzer des Einkaufswagens einerseits zusätzliche Einnahmen durch die Werbung zu verschaffen und andererseits den Umsatz in seinem Geschäft durch die Werbung zu erhöhen. Weiter kann der Kunde auf besondere Produkte oder Aktionen aufmerksam gemacht werden, wenn er durch das Verkaufslokal wandert.

Durch geeignete Ausgestaltung des Werbedrucks, sei es nun graphischer und/oder farblicher Art, gelingt es, das Auge des Kunden stets oder wiederholt auf den Deckel zu richten und bewusst oder unbewusst die Werbebotschaft zu übermitteln. Bei Verwendung eines Hologramms als Werbung kann auf ein und derselben Fläche unterschiedliche Werbung dargestellt werden, je nachdem aus welchem Blickwinkel der Kunde die Werbung betrachtet. Durch einfaches Auswechseln des kostengünstig herstellbaren Deckels kann die Werbung jederzeit aktualisiert werden oder es kann vorübergehend Werbung für einen anderen Auftraggeber aufgebracht sein. Durch Anbringen von Aufklebern kann auch auf ein momentanes Angebot aufmerksam gemacht werden, ohne dass die Deckel ausgewechselt werden müssen.

Anhand eines illustrierten Ausführungsbeispiels wird die Erfindung näher erläutert. Es zeigen:
- Figur 1: einen Einkaufswagen ausschnittsweise dargestellt mit einer bekannten Lesehilfe ohne Deckel,
- Figur 2: eine vergrösserte Darstellung der Lesehilfe,
- Figur 3: eine Seitenansicht der Lesehilfe mit geschlossenem Deckel,
- Figur 4: eine Ansicht der Lesehilfe mit geschlossenem Deckel von vorne,
- Figur 5: eine Ansicht der Lesehilfe mit geöffnetem Deckel von hinten.

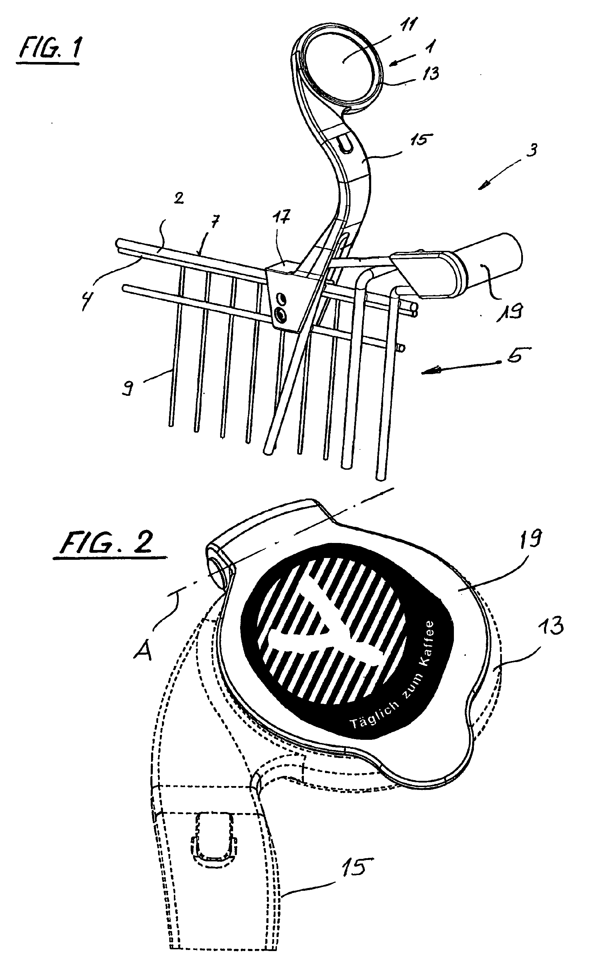

Mit Bezugszeichen 1 ist eine Leselupe an einem Einkaufswagen 5 bezeichnet. Die Leselupe 1 wird mit einer geeigneten Befestigungsvorrichtung an der Oberkante 7 einer gitterförmigen Seitenwand 9 des Einkaufswagens 5 befestigt (Figur 1). Die Verbindung der Befestigungsvorrichtung mit der meistens aus zwei übereinander angeordneten Profilstäben 2,4 bestehenden Oberkante 7 des Einkaufswagens 5 erfolgt durch eine Klemmvorrichtung 17.

In der vergrösserten Darstellung der Leselupe oder Lesehilfe 1 ist zumindest deren Lupenglas 11 mit einem Deckel 19 abgedeckt. Der Deckel 19 ist im oberen Bereich mit einem Scharnier gelenkig an der Fassung 13 angelenkt und um die Achse A hochschwenkbar und zwar so weit, dass der Deckel 19 nach Benützung der Lupe 1 von selbst in die Schliessstellung zurückklappt. Der Deckel 19 dient einerseits dazu, das Lupenglas 11 vor Verschmutzung und auch Vandalismus zu schützen und andererseits zu verhindern, dass bei ausserhalb von Gebäuden abgestellten Einkaufswagen 5, wie dies bei grossen Einkaufszentren mit Aussenparkplätzen häufig der Fall ist, durch die Bündelung der Sonnenstrahlen Gegenstände durch die dabei entstehende Fokussierung der Sonnenstrahlen und Hitzeerzeugung beschädigt werden oder sich entflammen können.

Auf der Oberseite des geschlossenen Deckels 19, welche bei geschlossenem Deckel 19 stets im Blickfeld der einkaufenden Person liegt, wenn sie Eingekauftes in den Wagen 5 legt oder den Wagen 5 vor sich herschiebt, ist eine Werbung 21 oder ein Logo angeordnet. Insbesondere fällt der Blick auch auf die Oberfläche des Deckels 19, wenn dieser geöffnet werden soll, um durch das Lupenglas 11 das Kleingeschriebene auf dem Eingekauften zu lesen. Auf der äusseren Oberfläche, welche leicht bombiert sein kann, ist der Werbeslogan, das Logo oder eine andere Mitteilung von Aktionen und dergleichen aufgebracht. Der Aufdruck kann eine beliebige geometrische Form aufweisen und als Tampon-Druck, Aufkleber oder Abziehbild als Inlay oder topografisch dargestellt sein. Es ist auch möglich, den Druck als Hologramm auszubilden, um je nach Blickwinkel auf den Deckel 19 verschiedene Botschaften auf der gleichen Fläche sichtbar zu machen. Selbstverständlich kann auch die Form, d.h. die äussere Kontur des Deckels 19, an die Form eines bekannten Logos (rechteckig, polygonal, rund, oval etc.) angepasst sein. Es ist insbesondere nicht Bedingung, dass der Deckel 19 der Kontur des darunter liegenden Lupenglases 11 folgen muss. Dieser ermöglicht es, dass die werbende Firma, es muss nicht das Verkaufsgeschäft sein, zu welchem der Einkaufswagen 5 gehört, bereits durch die Formgebung des Deckels 19 auf sich oder ihr Produkt aufmerksam machen kann.

Der Deckel 19 ist leicht und ohne Aufwand austauschbar, so dass jeweils bei Wechsel der Werbung der Deckel 19 auf einfache Weise von der Leselupe 1 gelöst und durch einen neuen mit anderer Werbung ersetzbar ist.

Die Werbebotschaft lässt sich, da der Deckel 19 bei der Bedruckung oder Bearbeitung nicht an der Leselupe 1 befestigt ist, kostengünstig vornehmen. Er könnte auch von der werbenden Firma ausgeliefert werden.

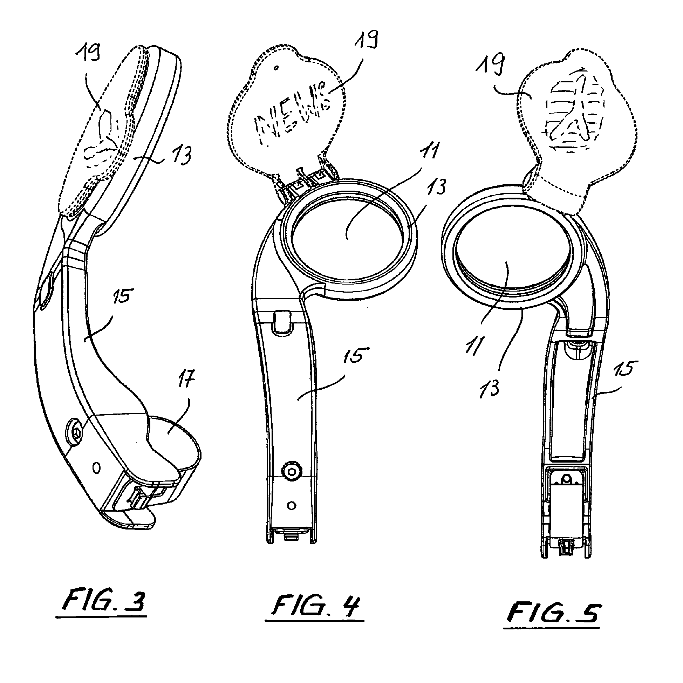

Es ist auch ohne weiteres möglich, zusätzlich die Innenseite des Deckels 19, wie sie in Figur 4 sichtbar ist, mit einer Aufschrift zu versehen, welche Werbung oder eine Information des Verkaufsgeschäfts oder eine Dritten umfasst.

### Legende der Bezugszeichen

- 1: Leselupe
- 2: Profilstange
- 4: Profilstange
- 5: Einkaufswagen
- 7: Oberkante
- 9: Seitenwand
- 11: Lupenglas
- 13: Fassung
- 15: Arm
- 17: Fuss
- 19: Deckel
- 21: Werbeaufdruck

## Patentansprüche

1. Lesehilfe (1) mit einem Deckel (19) und mit einer Befestigungsvorrichtung zur Befestigung der Lesehilfe (1) an der Oberkante (7) einer gitterförmigen Seitenwand (9) eines Einkaufswagens (5), derart, dass die Lesehilfe mit dem Deckel stets im Blickfeld der einkaufenden Person liegt, wenn sie Eingekauftes in den Wagen (5) legt oder den Wagen (5) vor sich herschiebt, wobei der Deckel (19) durch ein Scharnier im oberen Bereich der Fassung der Lesehilfe (1) mit dieser gelenkig verbunden ist und mindestens den Bereich des Lupenglases (11) vollständig überdeckt, wobei
eine Oberfläche des Deckels (19) eine Unterlage für einen Werbeaufdruck (21) bildet, welcher im direkten Blickfeld des Kunden liegt.

2. Lesehilfe nach Anspruch 1, **dadurch gekennzeichnet, dass** die Querschnittsform des Deckels (19) der Gestalt eines Werbeaufdrucks (21) oder eines aufgedruckten Logos angepasst ist oder diesem entspricht.

3. Lesehilfe nach einem der Ansprüche 1 oder 2, **dadurch gekennzeichnet, dass** der Werbeaufdruck (21) auf der Deckeloberfläche aufgedruckt oder als Aufkleber aufgeklebt oder in den Deckel (19) eingeprägt ist, oder dass der Werbeaufdruck (21) auf einer im Kunststoff des Deckels (19) eingelegten Folie aufgebracht ist.

4. Lesehilfe nach einem der Ansprüche 1 bis 3, **dadurch gekennzeichnet, dass** der Werbeaufdruck (21) als Hologramm ausgebildet ist und mehrere unterschiedliche Werbungen trägt.

5. Lesehilfe nach einem der Ansprüche 1 bis 4, **dadurch gekennzeichnet, dass** auf der Unterseite des Deckels (19) Werbung oder Infos aufgebracht sind.

## Claims

1. Reading aid (1) with a cover (19) and with a fastening device for fastening the reading aid (1) to the upper edge (7) of a trellised sidewall (9) of a shopping cart (5) such that the reading aid with the cover is always within the field of vision of the person shopping when he or she puts purchased goods in the cart (5) or pushes the cart (5) ahead of himself or herself, wherein the cover (19) is hinged to the reading aid (1) by means of a hinge in the upper region of the frame of the reading aid and completely covers at least the region of the magnifying glass (11), wherein a surface of the cover (19) forms a support for a promotional imprint (21) that is within the customer's direct field of vision.

2. Reading aid according to claim 1, **characterized in that** the cross-sectional shape of the cover (19) is adapted to or corresponds to the shape of a promotional imprint (21) or of an imprinted logo.

3. Reading aid according to any one of claims 1 or 2, **characterized in that** the promotional imprint (21) is imprinted on the cover surface or stuck thereon in the form of a sticker or impressed in the cover (19) or that the promotional imprint (21) is applied to a film inserted in the synthetic material of the cover (19).

4. Reading aid according to any one of claims 1 to 3, **characterized in that** the promotional imprint (21) is designed as a hologram and carries several different advertising slogans.

5. Reading aid according to any one of claims 1 to 4, **characterized in that** the bottom surface of the cover (19) shows advertising or information.

## Revendications

1. Aide à la lecture (1) avec un couvercle (19) et avec un dispositif de fixation pour la fixation de l'aide à la lecture (1) sur l'arête supérieure (7) d'une paroi latérale (9) en forme de treillis d'un chariot d'achat (5) de telle sorte que l'aide à la lecture avec le couvercle est constamment dans le champ de vision de la personne qui achète quand elle pose ses achats dans le chariot (5) ou bien quand elle pousse le chariot devant elle, le couvercle (19) étant, par une charnière dans la zone supérieure de la monture de l'aide à la lecture (1), raccordé de façon articulée à cette dernière, et recouvrant complètement au moins la zone du verre de loupe (11), une surface du couvercle (19) formant un support pour une inscription publicitaire (21) qui est située dans le champ de vision direct du client.

2. Aide à la lecture selon la revendication 1, **caractérisée en ce que** la forme de section transversale du couvercle (19) est adaptée à la configuration d'une inscription publicitaire (21) ou d'un logo imprimé ou lui correspond.

3. Aide à la lecture selon l'une des revendications 1 ou 2, **caractérisée en ce que** l'inscription publicitaire (21) est imprimée sur la surface de couvercle ou est collée en tant qu'autocollant ou est gravée dans le couvercle (19), ou **en ce que** l'inscription publicitaire (21) est appliquée sur un feuillet inséré dans la matière plastique du couvercle (19).

4. Aide à la lecture selon l'une des revendications 1 à 3, **caractérisée en ce que** l'inscription publicitaire (21) est constituée en tant qu'hologramme et porte plusieurs publicités différentes.

5. Aide à la lecture selon l'une des revendications 1 à 4, **caractérisée en ce qu'**une publicité ou des informations est/sont appliquée(s) sur le côté inférieur du couvercle (19).
